# EUROPÄISCHE PATENTSCHRIFT

(11) **EP 3 548 721 B1**
(45) Veröffentlichungstag und Bekanntmachung des Hinweises auf die Patenterteilung: **17.02.2021**
(21) Anmeldenummer: 17816499.2
(22) Anmeldetag: 23.11.2017
(51) Int. Cl.: F01N 13/10, F01N 3/34, F02F 1/24, F02F 1/42

(54) **BRENNKRAFTMASCHINE MIT EINEM ZYLINDERKOPF SOWIE MIT EINEM SEKUNDÄRLUFTSYSTEM**
INTERNAL COMBUSTION ENGINE HAVING A CYLINDER HEAD AND A SECONDARY AIR SYSTEM
MOTEUR À COMBUSTION INTERNE COMPORTANT UNE CULASSE AINSI QU'UN SYSTÈME D'AIR SECONDAIRE

(30) Priorität: 02.12.2016 DE 102016123375
(43) Veröffentlichungstag der Anmeldung: 09.10.2019
(73) Patentinhaber: Volkswagen AG, 38440 Wolfsburg (DE)
(72) Erfinder: KAWELKE, Peter, 38550 Isenbüttel (DE)
(74) Vertreter: Scheffler, Jörg
(86) Internationale Anmeldenummer: PCT/EP2017/080249
(87) Internationale Veröffentlichungsnummer: WO 2018/099804

(56) Entgegenhaltungen:
- WO-A1-2009/036476
- WO-A1-2009/036476
- GB-A- 1 520 178
- US-A- 4 177 640
- US-A1- 2003 192 502
- US-A1- 2016 281 634

## Beschreibung

Die Erfindung betrifft eine Brennkraftmaschine mit einem Zylinderkopf, der mit einem mehrere Auslasskanäle aufweisenden Abgaskrümmer sowie mit einem Sekundärluftsystem ausgestattet ist, wobei die Brennkraftmaschine zumindest eine Ventilanordnung zur Beschränkung einer Fluidströmung des Abgases von dem Abgaskrümmer zu dem Sekundärluftsystem aufweist. Weiterhin betrifft die Erfindung einen Zylinderkopf für eine solche Brennkraftmaschine.

Die Schadstoffemission einer Brennkraftmaschine lässt sich durch katalytische Nachbehandlung mit Hilfe von Abgaskatalysatoren in Verbindung mit einer Lambda-Regelungseinrichtung wirksam verringern. Eine wichtige Voraussetzung hierfür ist jedoch, dass neben der Lambdasonde der Lambda-Regelungseinrichtung auch der Abgaskatalysator seine Anspringtemperatur (Light-Off-Temperatur) erreicht hat. Eine Möglichkeit zur schnellen Aufheizung des Abgaskatalysators besteht darin, Sekundärluft stromabwärts der Auslassventile in den Abgaskrümmer der Brennkraftmaschine einzublasen. Die Sekundärluft wird von einer Sekundärluftpumpe geliefert und über ein ein Sekundärluftventil enthaltendes Leitungssystem hinter die Auslassventile der Brennkraftmaschine in das Abgas geführt. Die exotherme Reaktion der Sekundärluft mit unverbranntem Kraftstoff im heißen Abgas und dessen weitere Oxidation vor und im Abgaskatalysator führt zu einer beschleunigten Aufheizung des Abgaskatalysators auf seine Betriebstemperatur und damit zu einer Verringerung der Schadstoffemissionen in der Warmlaufphase der Brennkraftmaschine.

Es ist bekannt, in Abhängigkeit von der Motortemperatur Sekundärluft über einen Sekundärluftkanal hinter den Auslassventilen zuzuführen. Ein beispielsweise als Kombiventil ausgeführtes Rückschlagventil öffnet hierzu den Luftweg zu einem Luftkanal im Zylinderkopf abgasseitig und verhindert in Ruhestellung, dass Abgase aus der Brennkraftmaschine in die Umwelt gelangen können. Sobald Unterdruck angelegt wird, zieht eine Membran im Ventil einen Stößel mit Dichtung nach unten und öffnet so den Kanal für die Sekundärluft.

Eine gattungsgemäße Brennkraftmaschine offenbart auch bereits die DE 10 2014 101 595 A1, die sich auf ein Sekundärluft-Einblassystem mit separaten Strömungspfaden für jeden Satz von Krümmerrohren in einem verzweigten Abgassystem bezieht.

Aus der DE 10 2012 212 218 A1 ist eine Brennkraftmaschine mit einem Abgaskanal in einem Zylinderkopf des Verbrennungsmotors und einem Einwegventil bekannt, das mit einem Sekundärluftsystem gekoppelt ist, wobei das Einwegventil eine Fluidkommunikation von dem Abgaskanal zu dem Sekundärluftsystem beschränkt.

Die DE 10 2014 007 190 A1 betrifft eine Abgasanlage einer Brennkraftmaschine mit einem Sekundärluftventil zur Steuerung der Zufuhr von Sekundärluft in der Abgasanlage, durch das ein schnelles Ansprechverhalten mit einem großen Strömungsquerschnitt in der Offenstellung kombiniert und ein Zurückströmen von Abgasen in den Frischlufttrakt sicher verhindert werden kann.

Ferner betrifft die DE 20 2006 004 838 U1 einen Luftkanal mit Rückschlagklappenvorrichtung zum Verschließen eines Luftweges mit mindestens einer Absperrklappe, die von einer im Luftweg strömenden Luftströmung entgegen einer Schließkraft geöffnet wird. Hierzu weist der Luftkanal ein zu seiner Längserstreckung abgeschrägt verlaufendes Ende auf. Die Absperrklappe ist zur Vertikalen derart geneigt angeordnet, dass eine Gewichtskraftkomponente ihres Gewichtes die Schließkraft erzeugt. Gegenüber Federlösungen zum Erzeugen der Schließkraft führt dies zu einem geringeren Druckverlust im Luftkanal, da bei Federn mit wachsender Federauslenkung die Schließkraft ansteigt, die von dem durch die Luftströmung aufgebrachten Druck überwunden werden muss. Weitere Sekundärluftsysteme sind aus WO2009/036476 und US2016281634 bekannt.

Die Einleitung der Sekundärluft in den sich an den Abgaskrümmer anschließenden Abgaskanal kann in der Praxis zu einer eingeschränkten Durchmischung des Abgases mit der Sekundärluft führen, sodass die Konvertierung der Schadstoffe im Katalysator beeinträchtigt ist und dadurch die Einhaltung der Abgasgrenzwerte erschwert wird.

Es sind bereits Versuche unternommen worden, durch eine Anpassung der Auslegung des Abgasturboladers den Nachteil verschlechterten Aufladung am Eckmoment auszugleichen. Dies geht allerdings oftmals mit einer Verschlechterung des Verhaltens des Abgasturboladers bei Nennleistung einher, was sich beispielsweise in einem höheren Nennleistungsverbrauch oder einer reduzierten Nennleistung der Brennkraftmaschine bzw. einer Verringerung der sogenannten "Hitze-Höhe-Reserve" widerspiegelt.

Vor diesem Hintergrund liegt der Erfindung die Aufgabe zugrunde, eine Verbesserung der Brennkraftmaschine insbesondere hinsichtlich der Aufladung des Abgasturboladers mit einem geringen Aufwand zu erreichen. Weiterhin liegt der Erfindung die Aufgabe zugrunde, einen dementsprechenden Zylinderkopf zu schaffen.

Die erstgenannte Aufgabe wird gelöst mit einer Brennkraftmaschine gemäß den Merkmalen des Patentanspruches 1. Die Unteransprüche betreffen besonders zweckmäßige Weiterbildungen der Erfindung.

Erfindungsgemäß ist also eine Brennkraftmaschine vorgesehen, bei welcher der Abgaskrümmer und das Sekundärluftsystem als integrale Bestandteile des Zylinderkopfes ausgeführt sind, wobei das Sekundärluftsystem mehrere, mit einem jeweiligen Auslasskanal verbundene Zuführkanäle in dem integrierten Abgaskrümmer mit zumindest einer Ventilanordnung aufweist. Erfindungsgemäß entkoppelt die Ventilanordnung die Verteilerleiste des Sekundärluftsystems von dem integrierten Abgaskrümmer. Die Ventilanordnungen sind in dem Zuführkanal zwischen dem integrierten Abgaskrümmer und dem Sekundärluftsystem angeordnet und so ausgestaltet, dass diese im gewöhnlichen Betrieb der Brennkraftmaschine, insbesondere bei hohen Lasten und damit einhergehenden hohen Gasdrücken in dem Abgaskrümmer in der geschlossenen oder nahezu geschlossenen Stellung bleiben. In solchen Betriebssituationen, in welchen der Katalysator seine Betriebstemperatur noch nicht erreicht hat und in denen das Sekundärluftsystem aktiv ist, liegt der Gasdruck in dem Abgaskrümmer deutlich geringer im Vergleich zu hochlastigen Betriebspunkten der Brennkraftmaschine. Der Druck im Sekundärluftsystem ist dann größer als im Abgaskrümmer, sodass die Ventilanordnung geöffnet ist und Sekundärluft in die Abgaskrümmer strömen kann. Hierdurch muss die Auslegung des Abgasturboladers nicht angepasst werden, um die Leistungsfähigkeit in Verbindung mit dem Sekundärluftsystem zu gewährleisten.

Dabei hat es sich bereits als besonders vorteilhaft erwiesen, wenn jeder Zuführkanal mit einer Ventilanordnung ausgestattet ist, sodass sich die Ventilanordnung in den jeweiligen Zuführkanal integrieren lässt und dadurch lediglich einen geringen Platzbedarf hat. Insbesondere lässt sich die Ventilanordnung so problemlos auch bei bereits vorhandenen Brennkraftmaschinen innerhalb des Zuführkanals anordnen bzw. nachrüsten. Ein zusätzliches Stellmittel ist dabei grundsätzlich ebenso wenig erforderlich wie eine Steuerung.

Die Ventilanordnung kann unterschiedliche Formen aufweisen, die entsprechend der Kontur und dem Verlauf des Zuführkanals ausgestaltet sind. Besonders bevorzugt weist die Ventilanordnung ein bewegliches Sperrmittel, insbesondere eine Verschlussklappe auf, die sich mit geringem Aufwand in den Zuführkanal integrieren lässt und zudem einen geringen Strömungswiderstand in der geöffneten Stellung der Ventilanordnung ermöglicht. Zudem erfordert die Anordnung einer derartigen Ventilanordnung keine konstruktiven Änderungen an dem Zylinderkopf.

Weiterhin ist das Sperrmittel um eine Schwenkachse schwenkbeweglich, die zu einem Flächenschwerpunkt oder Massenschwerpunkt des Sperrmittels einen Abstand aufweist. Indem also die Schwenkachse nicht durch den Flächen- bzw. Massenschwerpunkt des Sperrmittels, insbesondere der Verschlussklappe verläuft, nimmt diese in einem von äußeren Druckeinflüssen unbelasteten Zustand eine definierte Winkelstellung ein, die vorzugsweise zumindest teilweise geöffnet ist. Somit schließt die Verschlussklappe unter dem Einfluss eines Überdruckes des Abgaskrümmers gegenüber dem Sekundärluftsystem. Vorzugsweise ist das Sperrmittel außer den wirkenden Druckkräften ausschließlich durch die Schwerkraft belastet und weist insbesondere kein zusätzliches Federelement auf.

In dem jeweiligen Zuführkanal könnte eine Ausformung, beispielsweise mit einem den freien Querschnitt reduzierenden Vorsprung angeordnet sein, welche als Anschlag für das Sperrmittel dient. Besonders praxisnah ist es hingegen, wenn das Sperrmittel eine Schließstellung aufweist, die zu der Querschnittsebene des Zuführkanals geneigt angeordnet ist, und dass die Querschnittsform des Sperrmittels von der Querschnittsfläche in der Querschnittsebene des Zuführkanals im Bereich der Schwenkachse abweicht. So ist beispielsweise bei einer kreisförmigen Querschnittsfläche innerhalb des Zuführkanals das Sperrmittel entsprechend einer zur der Querschnittsebene geneigten Schnittebene durch den Zuführkanal oval ausgeformt und kann so bei Erreichen der Schließstellung nicht weiter verschwenkt werden.

Bei der Gestaltung der Verschlussklappe ist die spätere Einbaulage der Brennkraftmaschine innerhalb des Kraftfahrzeuges zu beachten. So können die Überströmkanäle gegenüber der Horizontalen in der Einbaulage beispielsweise mit einem Winkel von 60° geneigt angeordnet sein.

Das Sperrmittel besteht bevorzugt aus einer elliptischen Scheibe mit einer außermittig bezogen auf die Hauptachse quer zu dieser angeordneten Welle, sowie einer Hülse, in welcher die mit dem Sperrmittel verbundene Welle gelagert ist. Die Hülse weist beispielsweise einen Innendurchmesser von 6 mm und einen Außendurchmesser von ca. 10 mm auf.

Die Montage der Hülse in dem Zylinderkopf kann durch kraft- oder formschlüssige Verbindung, beispielsweise durch Verpressen oder Verschrauben, erfolgen. Für eine Schraubverbindung ist die Hülse mit einem Außengewinde versehen.

Entsprechend der späteren Neigung der Brennkraftmaschine im Betrieb ist bei der Montage die Einbaulage zu beachten, um die Öffnungs- bzw. Schließfunktion sicherzustellen.

Gemäß einer besonders bevorzugten Ausgestaltungsform nimmt das Sperrmittel bei fehlender Druckdifferenz zwischen dem Abgaskrümmer und dem Sekundärluftsystem eine zu der Haupterstreckung des Zuführkanals in einem des Sperrmittel einschließenden Abschnitt eine parallele Orientierung ein, sodass der Strömungswiderstand auf ein Minimum reduziert ist.

Dabei hat es sich auch bereits als besonders sinnvoll erwiesen, wenn das Sperrmittel einstellbar ausgeführt ist, um so insbesondere eine möglichst optimal abdichtende Schließstellung zu erreichen.

Bei einer anderen, ebenfalls besonders praxisgerechten Ausgestaltungsform der Erfindung ist das Sperrmittel mittels eines Aktors insbesondere von außen betätigbar, sodass die Funktionsfähigkeit auch unabhängig von der späteren Einbaulage der Brennkraftmaschine sichergestellt ist.

Besondres bevorzugt ist die Ventilanordnung innerhalb der Brennkraftmaschine unterhalb einer Ebene des Abgaskrümmers und oberhalb der Ebene des Sekundärluftsystems angeordnet. Bei dieser Variante erfolgt eine um 180° um die Schwenkachse des Sperrmittels gedrehte Anordnung in dem Zuführkanal. Bei abgeschalteter Brennkraftmaschine oder bei niedriglastigen Betriebspunkten der Brennkraftmaschine und bei aktiviertem Sekundärluftsystem ist das Sperrmittel geöffnet. Bei hochlastigen Betriebspunkten der Brennkraftmaschine wird das Sperrmittel geschlossen.

Weiterhin wird die Aufgabe noch mit einem Zylinderkopf für eine solche Brennkraftmaschine gelöst, in den ein Sekundärluftsystem und mehrere, mit einem jeweiligen Auslasskanal der Brennkraftmaschine in dem Zylinderkopf verbundene Zuführkanäle mit einer jeweiligen, ein Sperrmittel umfassenden Ventilanordnung integriert sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines Zylinderkopfes mit einem integrierten Abgaskrümmer und mit einem Sekundärluftsystem mit einer Absperrklappe;
- Fig. 2: einen hochlastigen Betriebszustand der Brennkraftmaschine mit inaktivem Seku ndärluftsystem;
- Fig. 3: einen niedriglastigen Betriebszustand der Brennkraftmaschine mit aktivem Sekundärluftsystem;
- Fig. 4: eine vergrößerte perspektivische Darstellung der in Figur 1 erkennbaren Absperrklappe;
- Fig. 5: eine Seitenansicht der in Figur 2 gezeigten Absperrklappe.

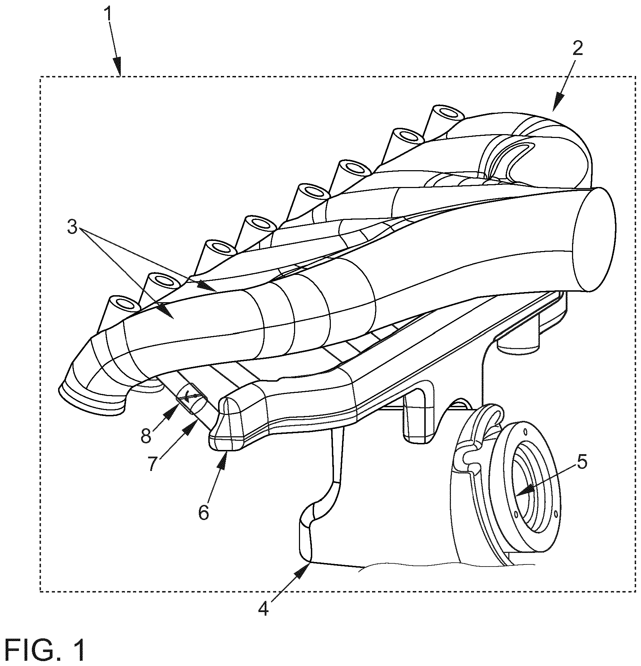

Die erfindungsgemäße Brennkraftmaschine wird nachstehend anhand der Figuren 1 bis 5 näher erläutert. Die Brennkraftmaschine hat einen Zylinderkopf 1 mit einem integrierten Abgaskrümmer 2, welcher mehrere Auslasskanäle 3 aufweist. Weiterhin ist die Brennkraftmaschine mit einem Sekundärluftsystem 4 ausgestattet, um während der Kaltstartphase durch einen Einlass 5 zusätzlich zugeführte Umgebungsluft als Sekundärluft in die Abgasströmung in Strömungsrichtung hinter den nicht gezeigten Auslassventilen der Brennkraftmaschine in den Abgaskrümmer 2 zuführen zu können. Das Sekundärluftsystem 4 hat für die Frischluftzufuhr mehrere, eine Verteilerleiste 6 des Sekundärluftsystems 4 mit dem jeweiligen Auslasskanal 3 verbindende, in dem integrierten Abgaskrümmer 2 angeordnete Zuführkanäle 7, die jeweils mit einer Ventilanordnung 8 ausgestattet sind.

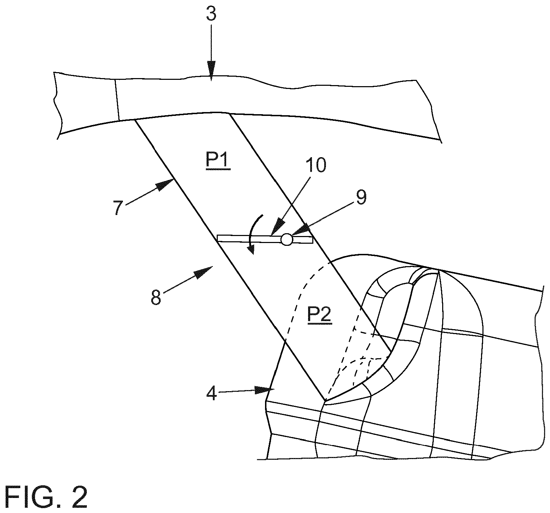

Die Ventilanordnung 8 hat jeweils ein als eine Verschlussklappe ausgeführtes, um eine Schwenkachse 9 schwenkbewegliches Sperrmittel 10, wobei die Schwenkachse 9 einen Abstand a zu dem Massenschwerpunkt des Sperrmittels 10 aufweist. Entsprechend der in Figur 2 gezeigten Einbaulage der Brennkraftmaschine in einem nicht gezeigten Kraftfahrzeug nimmt das Sperrmittel 10 aufgrund dieser außermittigen Anordnung der Schwenkachse 9 unter dem Einfluss der Schwerkraft eine definierte, geschlossene Stellung ein, wenn zwischen dem Abgaskrümmer 2 und dem Sekundärluftsystem 4 keine Druckdifferenz herrscht oder aber der Gasdruck P1 auf der Seite des Abgaskrümmers 2 größer ist als der Gasdruck P2 auf der Seite des Sekundärluftsystems 4.

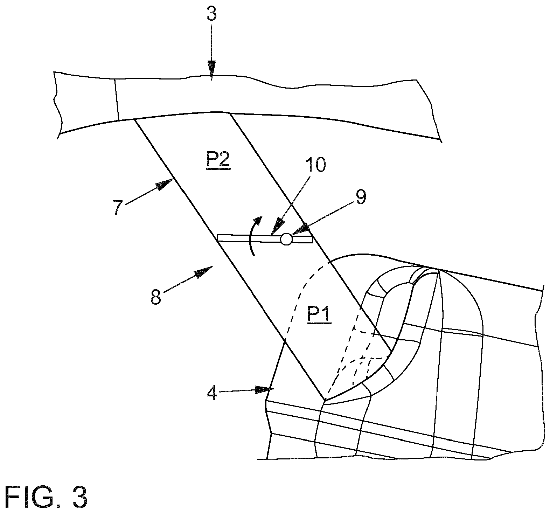

Wie in Figur 3 zu erkennen, schwenkt das Sperrmittel 10 unter dem Einfluss eines relativen Überdruckes des Gasdruckes P1 auf der Seite des Sekundärluftsystems 4 gegenüber dem Gasdruck P2 der Seite des Abgaskrümmers 2 selbsttätig in die parallel zu der Haupterstreckung des Zuführkanales 7 orientierte, geöffnete Stellung, sodass die Frischluft nahezu ungehindert durch den Zuführkanal 7 strömen kann.

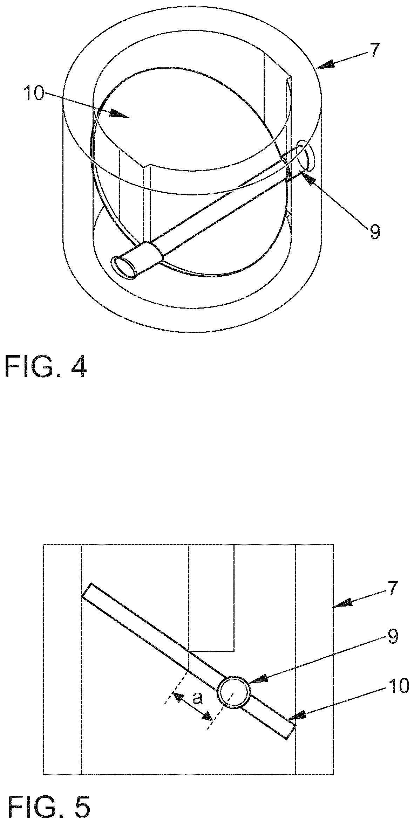

Um eine definierte Schließposition einer zu der Querschnittsebene des Zuführkanales 7 geneigten Orientierung in der Schließstellung zu erreichen, weist das Sperrmittel 10 eine ovale Form auf, die größer ist als die Querschnittsfläche in dem Zuführkanal 7 und dadurch nicht weiter verschwenkt werden kann, wie dies in Figuren 4 und 5 erkennbar ist.

### Bezugszeichenliste

- 1: Zylinderkopf
- 2: Abgaskrümmer
- 3: Auslasskanal
- 4: Sekundärluftsystem
- 5: Einlass

- 6: Verteilerleiste
- 7: Zuführkanal
- 8: Ventilanordnung
- 9: Schwenkachse
- 10: Sperrmittel

- P1: Gasdruck
- P2: Gasdruck
- a: Abstand

## Patentansprüche

1. Brennkraftmaschine mit einem Zylinderkopf (1), der mit einem mehrere Auslasskanäle (3) aufweisenden Abgaskrümmer (2) sowie mit einem Sekundärluftsystem (4) ausgestattet ist, wobei die Brennkraftmaschine zumindest eine Ventilanordnung (8) zur Beschränkung einer Fluidströmung des Abgases von dem Abgaskrümmer (2) zu dem Sekundärluftsystem (4) aufweist, wobei der Abgaskrümmer (2) und das Sekundärluftsystem (4) als integrale Bestandteile des Zylinderkopfes (1) ausgeführt sind, wobei das Sekundärluftsystem (4) mehrere, mit einem jeweiligen Auslasskanal (3) verbundene Zuführkanäle (7) in dem integrierten Abgaskrümmer (2) mit zumindest einer Ventilanordnung (8) aufweist, wobei jeder Zuführkanal (7) mit einer Ventilanordnung (8) ausgestattet ist und jede Ventilanordnung (8) ein bewegliches Sperrmittel (10) aufweist, und wobei die Ventilanordnungen (8) im gewöhnlichen Betrieb der Brennkraftmaschine bei hohen Gasdrücken in dem Abgaskrümmer (2) in der geschlossenen oder nahezu geschlossenen Stellung bleiben und die Ventilanordnung (8) geöffnet ist, sodass Sekundärluft in die Abgaskrümmer (2) strömt, wenn der Druck im Sekundärluftsystem (4) größer ist als im Abgaskrümmer (2), **dadurch gekennzeichnet, dass** das Sperrmittel (10) um eine Schwenkachse (9) schwenkbeweglich angeordnet ist, die zu einem Flächenschwerpunkt oder Massenschwerpunkt des Sperrmittels (10) einen Abstand (a) aufweist, und das Sperrmittel (10) außer den wirkenden Druckkräften ausschließlich durch die Schwerkraft belastet ist.

2. Brennkraftmaschine nach Anspruch 1, **dadurch gekennzeichnet, dass** das Sperrmittel (10) eine Schließstellung aufweist, die zu der Querschnittsebene des Zuführkanales (7) geneigt angeordnet ist, und dass die Querschnittsform des Sperrmittels (10) von der Querschnittsfläche in der Querschnittsebene des Zuführkanales (7) abweicht.

3. Brennkraftmaschine nach Anspruch 1 oder 2, **dadurch gekennzeichnet, dass** das Sperrmittel (10) bei fehlender Druckdifferenz eine zu der Haupterstreckung des Zuführkanales (7) in einem das Sperrmittel (10) einschließenden Abschnitt parallele Orientierung einnimmt.

4. Brennkraftmaschine nach zumindest einem der vorangehenden Ansprüche, **dadurch gekennzeichnet, dass** das Sperrmittel (10) einstellbar, insbesondere mittels eines Aktors betätigbar, ausgeführt ist.

5. Brennkraftmaschine nach zumindest einem der vorangehenden Ansprüche, **dadurch gekennzeichnet, dass** die Ventilanordnung (8) innerhalb der Brennkraftmaschine unterhalb einer Ebene des Abgaskrümmers (2) angeordnet ist.

6. Zylinderkopf (1) einer Brennkraftmaschine nach einem der vorangehenden Ansprüche.

## Claims

1. Internal combustion engine having a cylinder head (1) that is equipped with an exhaust manifold (2), having several outlet channels (3), as well as with a secondary air system (4), wherein the internal combustion engine has at least one valve assembly (8) for restricting a fluid flow of the exhaust gas from the exhaust manifold (2) to the secondary air system (4); wherein the exhaust manifold (2) and the secondary air system (4) are executed as integral components of the cylinder head (1); wherein the secondary air system (4) has several supply channels (7), connected to a respective exhaust channel (3), in the integrated exhaust manifold (2) having at least one valve assembly (8); wherein each supply channel (7) is equipped with a valve assembly (8), and each valve assembly (8) has a movable barrier means (10); and wherein, in conventional operation of the internal combustion engine at high gas pressures in the exhaust manifold (2), the valve assemblies (8) remain in the closed or nearly closed position, and the valve assembly (8) is opened so that secondary air flows into the exhaust manifold (2) if the pressure in the secondary air system (4) is greater than in the exhaust manifold (2), **characterized in that** the barrier means (10) is arranged so as to be able to execute a pivot motion about a pivot axis (9) that is at a distance (a) from a centroid of area or center of gravity of the barrier means (10), and the barrier means (10) is loaded exclusively by the force of gravity, apart from the acting pressure forces.

2. Internal combustion engine according to claim 1, **characterized in that** the barrier means (10) has a closed position which is arranged inclined with respect to the cross-sectional plane of the supply channel (7), and **in that** the cross-sectional shape of the barrier means (10) deviates from the cross-sectional area in the cross-sectional plane of the supply channel (7).

3. Internal combustion engine according to claim 1 or 2, **characterized in that,** in the absence of a pressure difference, the barrier means (10) assumes an orientation parallel to the main extension of the supply channel (7) in a segment enclosing the barrier means (10).

4. Internal combustion engine according to at least one of the preceding claims, **characterized in that** the barrier means (10) is designed to be adjustable - in particular, operable by means of an actuator.

5. Internal combustion engine according to at least one of the preceding claims, **characterized in that** the valve assembly (8) is arranged inside the internal combustion engine, below a plane of the exhaust manifold (2).

6. Cylinder head (1) of an internal combustion engine according to one of the preceding claims.

## Revendications

1. Moteur à combustion interne comportant une culasse (1), qui est équipé d'un collecteur d'échappement (2), lequel présente plusieurs canaux d'échappement (3), ainsi que d'un système d'air secondaire (4), le moteur à combustion interne présentant au moins un ensemble soupape (8) destiné à limiter un écoulement de fluide des gaz d'échappement depuis le collecteur d'échappement (2) vers le système d'air secondaire (4), le collecteur d'échappement (2) et le système d'air secondaire (4) étant conçus comme des éléments constitutifs de la culasse (1), le système d'air secondaire (4) présentant plusieurs canaux d'alimentation (7) reliés à un canal d'échappement (3) respectif dans le collecteur d'échappement (2) intégré comprenant au moins un ensemble soupape (8), chaque canal d'alimentation (7) étant équipé d'un ensemble soupape (8) et chaque ensemble soupape (8) présentant un moyen de blocage mobile (10) et les ensembles soupapes (8), lors du fonctionnement habituel du moteur à combustion interne, restant dans la position fermée ou quasiment fermée en cas de pressions de gaz élevées dans le collecteur d'échappement (2), et l'ensemble soupape (8) étant ouvert de sorte que l'air secondaire s'écoule dans le collecteur d'échappement (2), lorsque la pression dans le système d'air secondaire (4) est supérieure à celle dans le collecteur d'échappement (2), **caractérisé en ce que** le moyen de blocage (10) est disposé mobile par pivotement autour d'un axe de pivotement (9) présentant une distance (a) par rapport à un centre de gravité de surface ou un centre de gravité de masse du moyen de blocage (10) et le moyen de blocage (10) est exclusivement chargé par la pesanteur en dehors des forces de pression actives.

2. Moteur à combustion interne selon la revendication 1, **caractérisé en ce que** le moyen de blocage (10) présente une position de fermeture qui est disposée inclinée par rapport au plan de section transversale du canal d'alimentation (7) et **que** la forme en section transversale du moyen de blocage (10) diffère de la surface en section transversale dans le plan de section transversale du canal d'alimentation (7).

3. Moteur à combustion interne selon la revendication 1 ou 2, **caractérisé en ce que** le moyen de blocage (10), en l'absence de différence de pression, adopte une orientation parallèle à l'extension principale du canal d'alimentation (7) dans un segment incluant le moyen de blocage (10).

4. Moteur à combustion interne selon au moins une des revendications précédentes, **caractérisé en ce que** le moyen de blocage (10) est conçu réglable, en particulier actionnable au moyen d'un actionneur.

5. Moteur à combustion interne selon au moins une des revendications précédentes, **caractérisé en ce que** l'ensemble soupape (8) est disposé à l'intérieur du moteur à combustion interne en dessous d'un plan du collecteur d'échappement (2).

6. Culasse (1) d'un moteur à combustion interne selon l'une quelconque des revendications précédentes.
